# EUROPEAN PATENT APPLICATION

(11) **EP 4 207 400 A1**
(43) Date of publication of application: **05.07.2023**
(21) Application number: 22215487.4
(22) Date of filing: 21.12.2022
(51) Int. Cl.: H01M 8/04082, H01M 8/04302, H01M 8/04537, H01M 8/04746, H01M 8/04858, H01M 8/249

(54) **FUEL CELL SYSTEM, CONTROL DEVICE, AND CONTROL METHOD**

(30) Priority: 23.12.2021 JP 2021209482
(71) Applicant: Toshiba Energy Systems & Solutions Corporation, Saiwai-ku Kawasaki-shi Kanagawa (JP)
(72) Inventor: OGAWA, Masahiro, Kawasaki-shi, Kanagawa (JP); KIMURA, Shunsuke, Kawasaki-shi, Kanagawa (JP)
(74) Representative: Hoffmann Eitle

(57) **Abstract**

According to the present embodiment, a fuel cell system (1) includes a first fuel cell group(10a), a first power converter(12a), a second fuel cell group(10b), a second power converter(12b), and a first pipe(L14). The first fuel cell group(10a) is formed of a plurality of fuel cell stacks connected in series. The first power converter(12a) is capable of controlling a first power to be generated by the first fuel cell group(10a) according to a first output current. The second fuel cell group(10b) is formed of a plurality of fuel cell stacks(100b) connected in series, the fuel cell stacks(100b) corresponding respectively to the fuel cell stacks(100a) in the first fuel cell group(10a). The second power converte(12b)r is capable of controlling a second power to be generated by the second fuel cell group(10b) according to a second output current. Oxygen-containing gas is supplied through the first pipe(L14) to each of the fuel cell stacks(100a) in the first fuel cell group(10a) and each of the fuel cell stacks(100b) in the second fuel cell group(10b).

## Description

### FIELD

Embodiments of the present invention relate to a fuel cell system, a control device, and a control method.

### BACKGROUND

A fuel cell system has been conventionally known as directly converting chemical energy contained in fuel into electricity. This fuel cell system causes an electrochemical reaction between hydrogen-containing gas and oxygen-containing gas to occur to thereby directly extract electricity. Accordingly, this system has environmentally friendly characteristics that the system can extract electric energy with high efficiency and operate quietly without emitting harmful fuel gas. In the past, a large-sized PAFC (phosphoric acid fuel cell) has been mainly developed. In recent years, development of a PEFC (polymer electrolyte fuel cell) is increasingly active. In particular, household fuel cell systems with the PEFC have become commercially available in the fiscal year 2009 and become widespread. In the fiscal year 2021, more than 400,000 units of household fuel cell systems have been installed.

The household fuel cell system generates power by reforming natural gas or LP gas and converting the reformed gas into hydrogen. This system can reduce the amount of CO₂ emissions by 50%; however, it cannot realize zero emissions. In view of this, pure hydrogen fuel cell systems that directly introduce pure hydrogen are also being developed to be applicable to the future hydrogen economy. While various efforts are being made to achieve carbon neutrality by 2050 not only in Japan, but also globally, it is conceivable that since the price of hydrogen is falling, power generation by using large-sized fuel cells will become common worldwide in the near future. Also, it seems certain that it will be more common to use fuel cells in place of engines for mobile objects such as automobiles, heavy machinery, ships, and trains. In order to prepare for these circumstances, hydrogen fuel cells are being developed by various organizations.

In general, a single fuel cell stack is used for household purposes. However, it is assumed that a plurality of fuel cell stacks are combined to be used for business purposes or the future large-scale power generation. This is because it is difficult to increase the cell area or increase the number of cells unlimitedly due to the problems with device limitations on the fuel cell stacks and their sealing properties. Furthermore, there are various users' output needs, and it is thus desired to adjust the number of fuel cell stacks and standardize the fuel cell stacks to reduce costs.

In a case where a plurality of fuel cell stacks are used to form a system, the fuel cell stacks are electrically connected in series. This can simplify the system configuration and also increases the voltage to a relatively high level, which results in advantageous effects such as an increase in inverter efficiency. However, in the series connection, the voltage level rises, which increases various risks. For example, the DC voltage exceeds 750 V, which is categorized as high voltage level according to the electrical facilities standards, and thus the system needs to comply with strict rules.

Therefore, it is difficult to electrically connect an unlimited number of fuel cell stacks in series. In view of this, it is considered that fuel cells, in each of which several fuel cell stacks are connected in series, are further connected in parallel. In this case, when the fuel cells connected in parallel are controlled by a single power converter, a current (string current) flowing through each of the fuel cells connected in parallel is changed such that the voltages of the fuel cells perfectly match each other. Assuming that all the fuel cell stacks connected have the same characteristics, the voltages match each other and the currents also match each other. However, in reality, the voltage-current characteristics change due to the variations in characteristics of individual fuel cell stacks, their individual degraded conditions, and other factors. Accordingly, there are always variations in the string current flowing through each of the fuel cells.

Assuming that an equal amount of cell coolant and an equal amount of process gas such as hydrogen and oxygen are distributed to each individual fuel cell stack, it is unnecessary to individually control the fuel cell stacks, which is considered to be more efficient. Meanwhile, since the amount of process gas consumed is perfectly proportional to the generated current, a string-current deviation causes variations in gas consumption. However, when there are variations in the current deviation, it is difficult to adjust the amount of cell coolant and the amount of process gas such as hydrogen and oxygen according to the current deviation. This can possibly affect the gas utilization rate and other factors and reduce the service life of the fuel cells.

### BRIEF DESCRIPTION OF THE DRAWINGS

FIG. 1 is a block diagram illustrating a configuration example of a fuel cell system;
FIG. 2 is a diagram illustrating a configuration of a first fuel cell group and a second fuel cell group, and illustrating a connection example of a first pipe;
FIG. 3 is a diagram illustrating the configuration of the first fuel cell group and the second fuel cell group, and illustrating a connection example of a second pipe;
FIG. 4 is a diagram illustrating the configuration of the first fuel cell group and the second fuel cell group, and illustrating a connection example of a third pipe;
FIG. 5 is a diagram illustrating a configuration and a connection example of power converters;
FIG. 6 is a diagram schematically illustrating the state of power generation in a fuel cell constituting a fuel cell stack;
FIG. 7 is a block diagram illustrating a configuration of a control device;
FIG. 8 is a diagram illustrating a control example of a current controller;
FIG. 9 is a diagram illustrating a control example of a first flow rate controller;
FIG. 10 is a diagram illustrating a control example of a second flow rate controller;
FIG. 11 is a diagram illustrating a control example of a third flow rate controller;
FIG. 12 is a diagram illustrating a configuration example in which the first fuel cell group and the second fuel cell group are connected in parallel;
FIG. 13 is a diagram illustrating a control example for the parallel connection;
FIG. 14 is a flowchart illustrating an example of control processing in the control device;
FIG. 15 is a diagram illustrating an example in which a first power converter 1 and a second power converter are integrally formed;
FIG. 16 is a diagram illustrating an example in which a higher-level control device that controls the control device is further provided;
FIG. 17 is a diagram illustrating an example in which a higher-level power conversion controller is provided; and
FIG. 18 is a diagram illustrating an example in which the control device is formed of a first control device and a second control device.

### DETAILED DESCRIPTION

An embodiment of the present invention has been made in view of the above circumstances, and has an object of providing a fuel cell system, a control device, and a control method that are capable of adjusting respective output currents of a plurality of fuel cell groups in each of which several fuel cell stacks are connected in series.

According to the present embodiment, a fuel cell system comprises a first fuel cell group, a first power converter, a second fuel cell group, a second power converter, and a first pipe. The first fuel cell group is configured by connecting a plurality of fuel cell stacks in series. The first power converter can control a first power to be generated by the first fuel cell group according to a first output current. The second fuel cell group is configured by connecting a plurality of fuel cell stacks in series, the fuel cell stacks corresponding respectively to the fuel cell stacks in the first fuel cell group. The second power converter can control a second power to be generated by the second fuel cell group according to a second output current. The first pipe supplies oxygen-containing gas to each of the fuel cell stacks in the first fuel cell group and the fuel cell stacks in the second fuel cell group.

The fuel cell system, the control device, and the control method according to the embodiment of the present invention will be explained below in detail with reference to the accompanying drawings. The embodiments described below are only examples of the embodiments of the present invention and the present invention is not limited to the embodiments. In the drawings referred in the embodiments, same parts or parts having identical functions are denoted by like or similar reference characters and there is a case where redundant explanations thereof are omitted. Further, for convenience of explanation, there are cases where dimensional ratios of the parts in the drawings are different from those of actual products and some part of configurations is omitted from the drawings.

### (Embodiment)

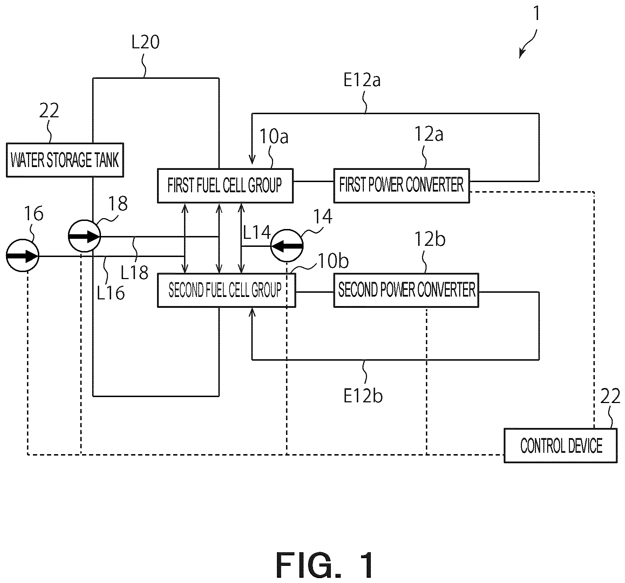

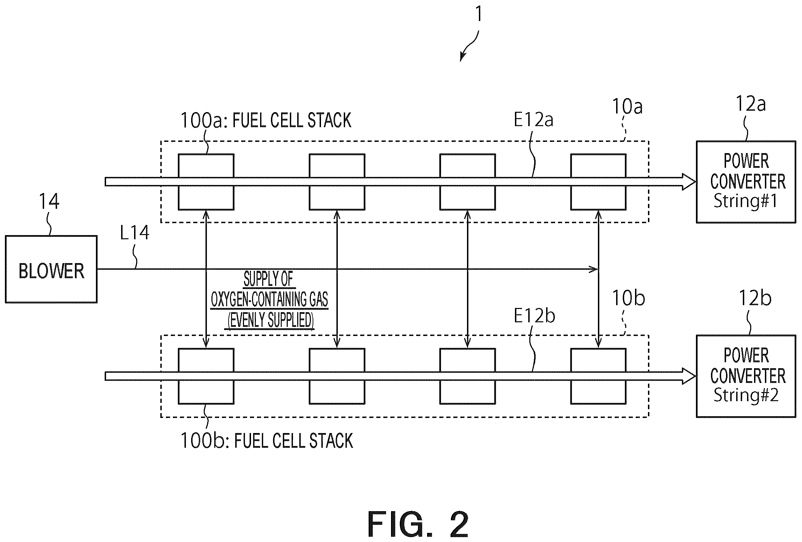

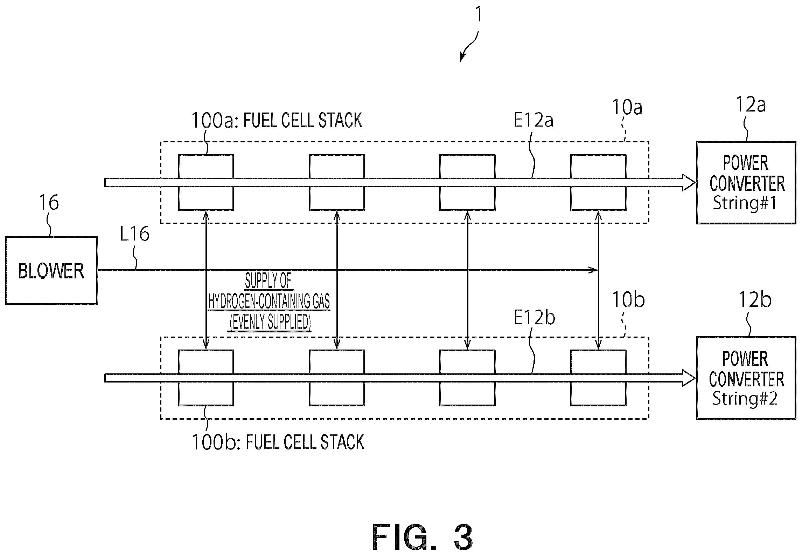

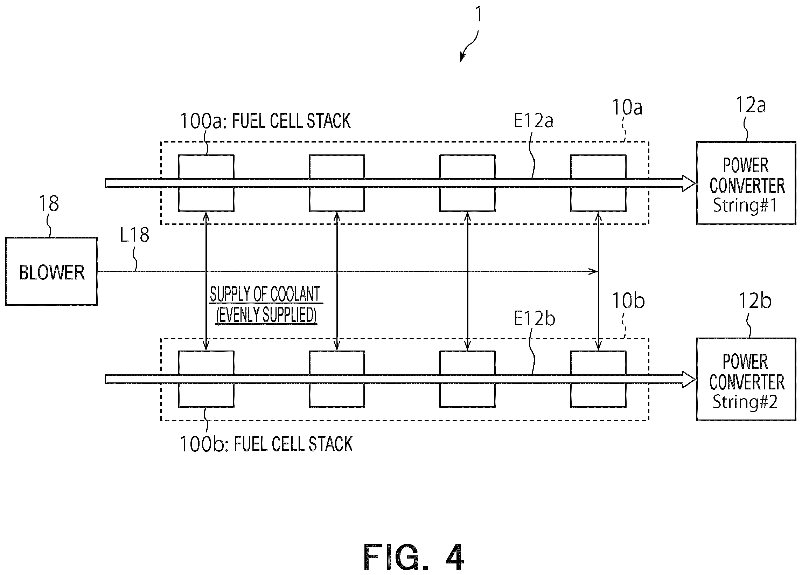

An example of the overall configuration of a fuel cell system 1 is described below with reference to FIGS. 1 to 4. FIG. 1 is a block diagram illustrating a configuration example of the fuel cell system 1. FIG. 2 is a diagram illustrating a configuration of a first fuel cell group 10a and a second fuel cell group 10b, and illustrating a connection example of a first pipe L14. FIG. 3 is a diagram illustrating the configuration of the first fuel cell group 10a and the second fuel cell group 10b, and illustrating a connection example of a second pipe L16. FIG. 4 is a diagram illustrating the configuration of the first fuel cell group 10a and the second fuel cell group 10b, and illustrating a connection example of a third pipe L18.

As illustrated in FIG. 1, the fuel cell system 1 includes the first fuel cell group 10a, the second fuel cell group10b, a first power converter 12a, a second power converter 12b, a first supply device 14, a second supply device 16, a third supply device 18, a water storage tank 22, a control device 24, a first wire E12a, a second wire E12b, the first pipe L14, the second pipe L16, the third pipe L18, and a fourth pipe L20.

As illustrated in FIG. 2, the first fuel cell group 10a is formed of a plurality of fuel cell stacks 100a connected in series. Each of the fuel cell stacks 100a uses hydrogen-containing gas and oxygen-containing gas to generate power.

The second fuel cell group 10b has an equivalent configuration to the first fuel cell group 10a. That is, the second fuel cell group 10b is formed of a plurality of fuel cell stacks 100b connected in series. The fuel cell stacks 100b correspond respectively to the fuel cell stacks 100a in the first fuel cell group 10a. In the present embodiment, connection of the fuel cell stacks 100a in series may be referred to as "string", and a current flowing through the fuel cell stacks 100a connected in series may be referred to as "string current". Any plural number of fuel cell stacks 100a may be connected in series, and the number of the fuel cell stacks 100a connected in series is not limited to four. Furthermore, in the fuel cell system 1 according to the present embodiment, two fuel cell groups including the first fuel cell group 10a and the second fuel cell group 10b are described below. However, the number of fuel cell groups is not limited to two. The fuel cell system 1 may be formed of two or more fuel cell groups. For example, the fuel cell system 1 may be formed of five fuel cell groups.

The first pipe L14 is an air pipe that connects the first supply device 14 to the fuel cell stacks 100a and the fuel cell stacks 100b. For example, oxygen-containing gas is supplied between the corresponding fuel cell stacks of the fuel cell stacks 100a in the first fuel cell group 10a and the fuel cell stacks 100b in the second fuel cell group 10b. Oxygen-containing gas, for example, air is supplied to the first pipe L14. This enables the oxygen-containing gas to be supplied through the first pipe L14 to air electrodes (cathode electrodes) of the fuel cell stacks 100a and the fuel cell stacks 100b.

The first supply device 14 is, for example, an air blower and is provided on the upstream side of the first pipe L14 relative to the first fuel cell group 10a and the second fuel cell group 10b. This first supply device 14 supplies oxygen-containing gas through the first pipe L14 from the upstream side of the air electrodes of the fuel cell stacks 100a and the fuel cell stacks 100b.

For example, individual pipes of the first pipe L14, each of which connects the corresponding fuel cell stack 100a and fuel cell stack 100b, have an equivalent diameter. "Having an equivalent diameter" in the present embodiment means that when oxygen-containing gas of equal pressure is supplied, an equal amount of the oxygen-containing gas is provided. Therefore, even if the pipes have different pipe diameters, when a substantially equal amount of oxygen-containing gas is supplied through, for example, a valve in each of the pipes, the pipes are regarded as having an equivalent pipe diameter. "A substantially equal amount" means that the absolute value of the difference in supply amount through the pipe connecting the fuel cell stack 100a and the fuel cell stack 100b falls within a few percent of the smaller supply amount. For example, preferably the substantially equal amount means that the absolute value falls within 1 percent of the smaller supply amount. As described above, the first pipe L14 makes it possible to supply an equivalent amount of oxygen-containing gas between the corresponding fuel cell stacks of the fuel cell stacks 100a in the first fuel cell group 10a and the fuel cell stacks 100b in the second fuel cell group 10b. In the present embodiment, individual pipes of the first pipe L14, each of which connects the corresponding fuel cell stack 100a and fuel cell stack 100b, are described as having an equivalent diameter. However, the configuration of the first pipe L14 is not limited thereto. For example, it is permissible that oxygen-containing gas is supplied through the pipe connecting the fuel cell stack 100a and the fuel cell stack 100b at a predetermined ratio of amount such as 6 to 4. In this case, for example, the ratio of the number of the fuel cell stacks 100a and the fuel cell stacks 100b may be set to 6 to 4. That is, it is possible to set the ratio of the total number of fuel cells between the first fuel cell group 10a and the second fuel cell group 10b to 6 to 4.

As illustrated in FIG. 3, the second pipe L16 is a fuel gas supply pipe that connects the second supply device 16 to the fuel cell stacks 100a and the fuel cell stacks 100b. Hydrogen-containing gas is supplied as fuel gas to the second pipe L16. The hydrogen-containing gas is thus supplied from the second supply device 16 through the second pipe L16 to fuel electrodes (anode electrodes) of the fuel cell stacks 100a and the fuel cell stacks 100b.

The second supply device 16 is, for example, a blower and is provided on the upstream side of the second pipe L16 relative to the first fuel cell group 10a and the second fuel cell group 10b. Hydrogen-containing gas is supplied through the second pipe L16 from the upstream side of the fuel electrodes of the fuel cell stacks 100a and the fuel cell stacks 100b.

For example, individual pipes of the second pipe L16, each of which connects the corresponding fuel cell stack 100a and fuel cell stack 100b, have an equivalent diameter. Accordingly, through the second pipe L16, an equivalent amount of hydrogen-containing gas is supplied between the corresponding fuel cell stacks of the fuel cell stacks 100a in the first fuel cell group 10a and the fuel cell stacks 100b in the second fuel cell group 10b. In the present embodiment, individual pipes of the second pipe L16, each of which connects the corresponding fuel cell stack 100a and fuel cell stack 100b, are described as having an equivalent diameter. However, the configuration of the second pipe L16 is not limited thereto. For example, it is permissible that hydrogen-containing gas is supplied through the pipe connecting the fuel cell stack 100a and the fuel cell stack 100b at a predetermined ratio of amount such as 6 to 4. In this case, the ratio of supply of hydrogen-containing gas is set corresponding to the ratio of supply of oxygen-containing gas.

As illustrated in FIG. 4, the third pipe L18 is a coolant supply pipe that connects the third supply device 18 to the fuel cell stacks 100a and the fuel cell stacks 100b. Coolant is supplied as a cooling liquid to the third pipe L18. The coolant is thus supplied from the third supply device 18 through the third pipe L18 to the fuel cell stacks 100a and the fuel cell stacks 100b.

For example, individual pipes of the third pipe L18, each of which connects the corresponding fuel cell stack 100a and fuel cell stack 100b, have an equivalent diameter. Accordingly, through the third pipe L18, an equivalent amount of coolant is supplied between the corresponding fuel cell stacks of the fuel cell stacks 100a in the first fuel cell group 10a and the fuel cell stacks 100b in the second fuel cell group 10b. In the present embodiment, individual pipes of the third pipe L18, each of which connects the corresponding fuel cell stack 100a and fuel cell stack 100b, are described as having an equivalent diameter. However, the configuration of the third pipe L18 is not limited thereto. For example, it is permissible that coolant is supplied through the pipe connecting the fuel cell stack 100a and the fuel cell stack 100b at a predetermined ratio of amount such as 6 to 4. In this case, the ratio of supply of coolant is set corresponding to the ratio of supply of oxygen-containing gas.

Referring back to FIG. 1, the fourth pipe L20 is a coolant discharge pipe that connects the water storage tank 22 to the fuel cell stacks 100a and the fuel cell stacks 100b. The water storage tank 22 collects coolant discharged from the fuel cell stacks 100a and the fuel cell stacks 100b. A cooling device cools the collected coolant. In this manner, the coolant discharged from the fuel cell stacks 100a and the fuel cell stacks 100b is collected into the water storage tank 22 through the fourth pipe L20.

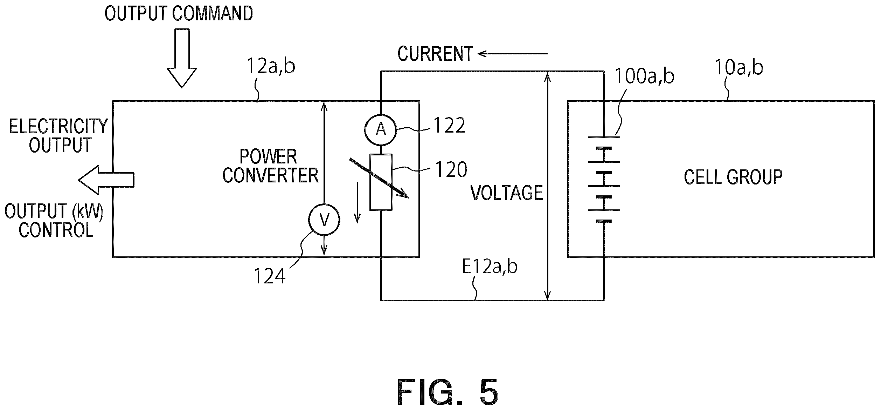

FIG. 5 is a diagram schematically illustrating a configuration and a connection example of the power converters 12a and 12b. As illustrated in FIG. 5, the power converters 12a and 12b are, for example, converters capable of controlling the power to be generated by the fuel cell groups 10a and 10b according to an output current. That is, the first power converter 12a and the second power converter 12b have an equivalent configuration. Hereinafter, the first power converter 12a, the second power converter 12b, and the like may be described simply as power converters 12a, 12b, and the like.

Each of the power converters 12a and 12b includes, for example, a variable resistor 120, an ampere meter 122, and a voltmeter 124. The wire E12a connects opposite ends of the fuel cell groups 10a to opposite ends of the variable resistor 120. The wire E12b connects opposite ends of the fuel cell groups 10b to opposite ends of the variable resistor 120. The ampere meter 122 measures the output current flowing through each of the wires E12a and E12b. The voltmeter 124 measures the voltage across the variable resistor 120.

Each of the power converters 12a and 12b changes the resistance of the variable resistor 120 such that the value of the ampere meter 122 becomes the target value in response to an output command from the control device 24. Each of the power converters 12a and 12b provides the value of the ampere meter 122 and the value of the voltmeter 124 to the control device 24. An output current of a fuel cell group 10 increases as the resistance of the variable resistor 120 decreases. At this time, the voltage value of each of the fuel cell groups 10a and 10b fluctuates according to the output current flowing through each of the fuel cell groups 10a and 10b. For example, the voltage value of each of the fuel cell groups 10a and 10b increases as the output current flowing through each of the fuel cell groups 10a and 10b increases. In other words, an output power of each of the fuel cell groups 10a and 10b is controlled by the resistance value of the variable resistor 120. The power converters 12a and 12b are not limited to having the configuration illustrated in FIG. 5, and can employ other configurations.

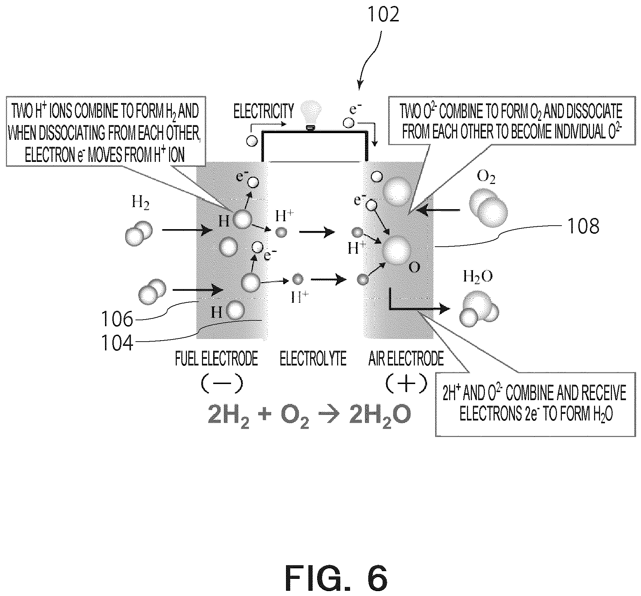

FIG. 6 is a diagram schematically illustrating the state of power generation in a fuel cell constituting the fuel cell stack. The fuel cell stack is formed of, for example, a plurality of unit cells 102 stacked on top of each other. The fuel cell stack according to the present embodiment is formed of, for example, PEFCs (polymer electrolyte fuel cells). However, the fuel cell stack is not limited thereto.

The unit cell 102 has a membrane electrode assembly. The membrane electrode assembly includes an electrolyte membrane 104, a fuel electrode (anode electrode) 106 located on one side of the electrolyte membrane 104, and an air electrode (cathode electrode) 108 located on the other side of the electrolyte membrane 104 opposite to the fuel electrode 106. Further, the fuel electrode 106 includes an anode catalytic layer, while the air electrode 108 includes a cathode catalytic layer.

The unit cell 102 generates power by a reaction expressed by Chemical Formula 1. Hydrogen-containing gas flows through a fuel electrode flow passage near the fuel electrode 106, and causes a fuel electrode reaction to occur. Oxygen-containing gas flows through an oxidant electrode flow passage near the air electrode 108, and causes an oxidant electrode reaction to occur. The fuel cell stacks 100a and 100b utilize these electrochemical reactions to extract electrical energy from the electrodes. As understood from the above descriptions, there is a direct proportional relationship between the output current produced by power generation in the unit cell 102 and the amount of oxygen-containing gas used for the power generation. Similarly to the above descriptions, there is a direct proportional relationship between the current produced by power generation in the unit cell 102 and the amount of hydrogen-containing gas used for the power generation.

(Chemical Formula 1) Fuel electrode reaction: 2H₂→4H⁺+4e⁻Air electrode reaction: 4H⁺+4e⁻+O₂→2H₂O

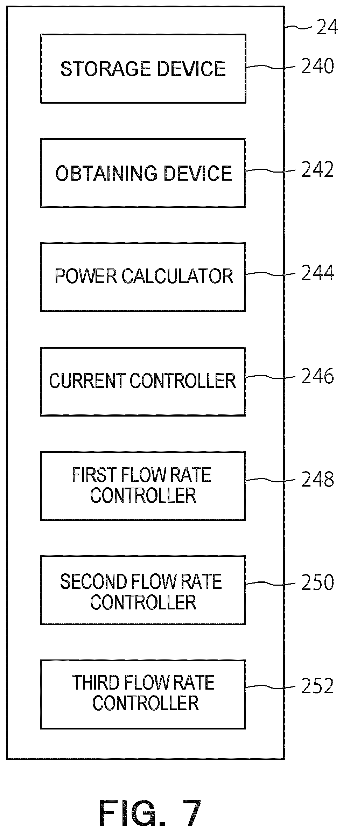

FIG. 7 is a block diagram illustrating a configuration of the control device 24. As illustrated in FIG. 7, the control device 24 controls the fuel cell system 1 in its entirety. The control device 24 is a microcomputer including, for example, a CPU (Central Processing Unit), a storage device 240, an obtaining device (input/output interface) 242, and other devices. The control device 24 executes control in accordance with programs stored in the storage device 240. That is, the control device 24 configures a power calculator 244, a current controller 246, a first flow rate controller 248, a second flow rate controller 250, and a third flow rate controller 252 in accordance with the programs stored in the storage device 240. The power calculator 244, the current controller 246, the first flow rate controller 248, the second flow rate controller 250, and the third flow rate controller 252 may be configured to serve as an electronic circuit.

The obtaining device 242 obtains various kinds of information on the fuel cell system 1. For example, the obtaining device 242 obtains information on a current value, a voltage value, and a power from the first power converter 12a and the second power converter 12b.

The power calculator 244 uses the current value and the voltage value obtained from each of the first power converter 12a and the second power converter 12b to calculate an output power of each of the first fuel cell group 10a and the second fuel cell group 10b. In a case where each of the first power converter 12a and the second power converter 12b calculates a power, the power calculator 244 can use the power calculated by each of the first power converter 12a and the second power converter 12b, so that the power calculation in the power calculator 244 can be omitted.

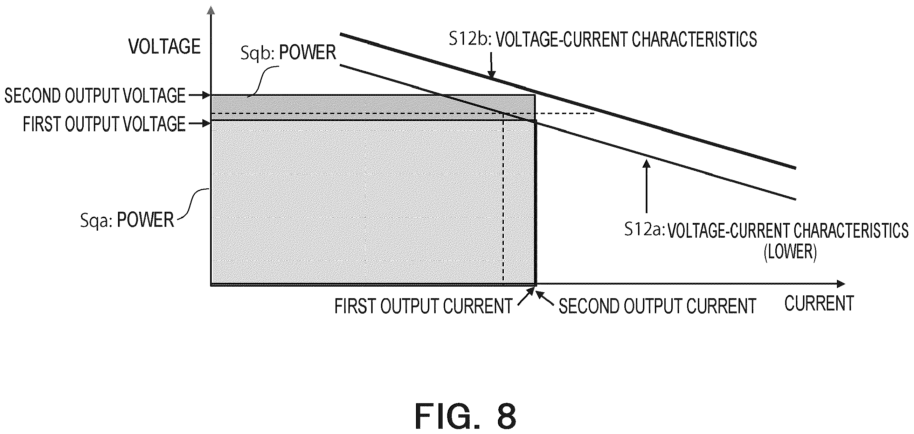

FIG. 8 is a diagram illustrating a control example of the current controller 246. The horizontal axis represents the current values of the first fuel cell group 10a and the second fuel cell group 10b. The vertical axis represents the voltage values of the first fuel cell group 10a and the second fuel cell group 10b. A line S12a shows the voltage-current characteristics of the first fuel cell group 10a. A line S12b shows the voltage-current characteristics of the second fuel cell group 10b. A square Sqa shows the power generated by the first fuel cell group 10a. A square Sqb shows the power generated by the second fuel cell group 10b. The first output voltage and the first output current show an output voltage and an output current of the first fuel cell group 10a, respectively. The second output voltage and the second output current show an output voltage and an output current of the second fuel cell group 10b, respectively.

As illustrated in FIG. 8, the current controller 246 uses the information obtained by the obtaining device 242 to control the first output current to be generated by the first fuel cell group 10a and the second output current to be generated by the second fuel cell group 10b, such that these first and second output currents become their predetermined values. For example, the current controller 246 according to the present embodiment controls the first power converter 12a and the second power converter 12b, such that the first output current to be generated by the first fuel cell group 10a is equal to the second output current to be generated by the second fuel cell group 10b. With this control, the first fuel cell group 10a and the second fuel cell group 10b use an equal amount of oxygen-containing gas to generate power.

There is a case where oxygen-containing gas is supplied through the first pipe L14 connecting the fuel cell stack 100a and the fuel cell stack 100b at a predetermined ratio of amount, for example, 6 to 4. In that case, the current controller 246 may control the ratio of the first output current and the second output current to correspond to the supply ratio. With this control, the first fuel cell group 10a and the second fuel cell group 10b can be supplied with an adequate amount of oxygen-containing gas.

As understood from the above descriptions, when individual pipes of the first pipe L14, each of which connects the corresponding fuel cell stack 100a and fuel cell stack 100b, have an equivalent diameter, the first flow rate controller 248 also enables the first supply device 14 to supply an adequate amount of oxygen-containing gas needed for the value of current to be generated by each of the first fuel cell group 10a and the second fuel cell group 10b.

As described above, the current controller 246 according to the present embodiment controls the first power converter 12a and the second power converter 12b to increase the first output current and the second output current such that the power becomes a target power value, while controlling the first and second output currents to be equal to each other. When the fuel cell system 1 starts driving, the current controller 246 also controls the first power converter 12a and the second power converter 12b to raise the first output current and the second output current from 0 such that the power becomes a target power value. This can reduce the power consumption of the first supply device 14, the second supply device 16, and the third supply device 18 during the adjustment control.

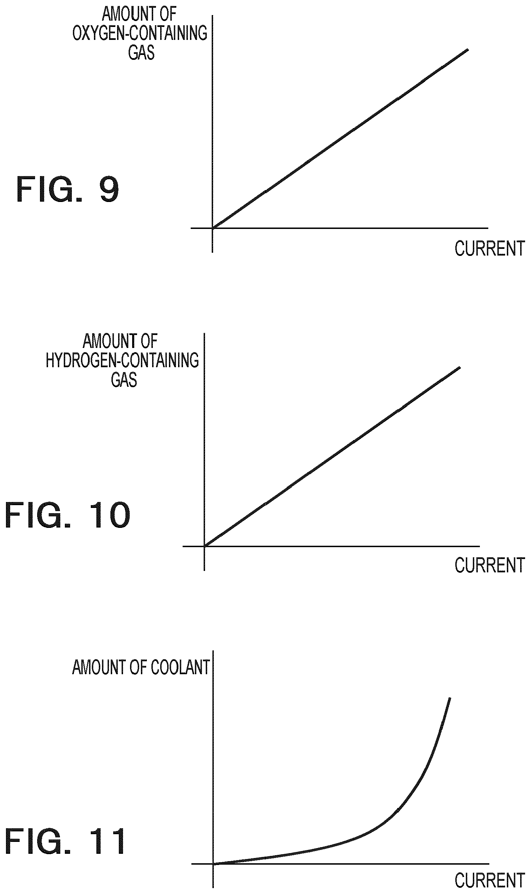

FIG. 9 is a diagram illustrating a control example of the first flow rate controller 248. The horizontal axis represents the current values of the first fuel cell group 10a and the second fuel cell group 10b. The vertical axis represents the amount of oxygen-containing gas to be supplied by the first supply device 14. As illustrated in FIG. 9, the first flow rate controller 248 causes the first supply device 14 to supply an amount of oxygen-containing gas proportional to the respective current values of the first fuel cell group 10a and the second fuel cell group 10b. That is, the first flow rate controller 248 causes the first supply device 14 to supply an adequate amount of oxygen-containing gas needed for the first fuel cell group 10a and the second fuel cell group 10b to generate their respective output currents.

As described above, the first pipe L14 is formed to supply an equivalent amount of oxygen-containing gas between the corresponding fuel cell stacks of the fuel cell stacks 100a in the first fuel cell group 10a and the fuel cell stacks 100b in the second fuel cell group 10b. With this configuration, the first supply device 14 supplies oxygen-containing gas according to the currents to be generated by the first fuel cell group 10a and the second fuel cell group 10b, and is therefore capable of supplying the first fuel cell group 10a and the second fuel cell group 10b with an adequate amount of oxygen-containing gas. In other words, in a case where the first output current and the second output current are controlled to become equal to each other, oxygen-containing gas is supplied through the first pipe L14 and thus the first fuel cell group 10a and the second fuel cell group 10b can be evenly supplied with an adequate amount of oxygen-containing gas. This makes it possible to reduce the power consumption of the first supply device 14. As described above, the first output current and the second output current are controlled to become equal to each other, so that the control for the first supply device 14 is simplified, while the power consumption of the first supply device 14 can be controlled according to the value of one of the output currents to be generated by the first fuel cell group 10a and the second fuel cell group 10b. Accordingly, the power consumption of the fuel cell system 1 can be controlled with higher precision.

There is a case where oxygen-containing gas is supplied through the first pipe L14 connecting the fuel cell stack 100a and the fuel cell stack 100b at a predetermined ratio of amount, for example, 6 to 4. In that case, the first flow rate controller 248 may control the ratio of the first output current and the second output current to correspond to the supply ratio. With this control, the first fuel cell group 10a and the second fuel cell group 10b can be supplied with an adequate amount of oxygen-containing gas. This makes it possible to reduce the power consumption of the first supply device 14.

FIG. 10 is a diagram illustrating a control example of the second flow rate controller 250. The horizontal axis represents the current values of the first fuel cell group 10a and the second fuel cell group 10b. The vertical axis represents the amount of hydrogen-containing gas to be supplied by the second supply device 16. As illustrated in FIG. 10, the second flow rate controller 250 causes the second supply device 16 to supply an amount of hydrogen-containing gas proportional to the respective current values of the first fuel cell group 10a and the second fuel cell group 10b. That is, the second flow rate controller 250 causes the second supply device 16 to supply an adequate amount of hydrogen-containing gas needed for the first fuel cell group 10a and the second fuel cell group 10b to generate their respective output currents.

As described above, the second pipe L16 is formed to supply an equivalent amount of hydrogen-containing gas between the corresponding fuel cell stacks of the fuel cell stacks 100a in the first fuel cell group 10a and the fuel cell stacks 100b in the second fuel cell group 10b. With this configuration, the second supply device 16 supplies hydrogen-containing gas according to the currents to be generated by the first fuel cell group 10a and the second fuel cell group 10b, and is therefore capable of supplying the first fuel cell group 10a and the second fuel cell group 10b with an adequate amount of hydrogen-containing gas. In other words, in a case where the first output current and the second output current are controlled to become equal to each other, hydrogen-containing gas is supplied through the second pipe L16 and thus the first fuel cell group 10a and the second fuel cell group 10b can be evenly supplied with an adequate amount of hydrogen-containing gas. This makes it possible to reduce the power consumption of the second supply device 16. As described above, the first output current and the second output current are controlled to become equal to each other, so that the control for the second supply device 16 is simplified, while the power consumption of the second supply device 16 can be controlled according to the value of one of the output currents from the first fuel cell group 10a and the second fuel cell group 10b. Accordingly, the power consumption of the fuel cell system 1 can be controlled with higher precision.

There is a case where hydrogen-containing gas is supplied through the second pipe L16 connecting the fuel cell stack 100a and the fuel cell stack 100b at a predetermined ratio of amount, for example, 6 to 4. In that case, the second flow rate controller 250 may control the ratio of the first output current and the second output current to correspond to the supply ratio. With this control, the first fuel cell group 10a and the second fuel cell group 10b can be supplied with an adequate amount of hydrogen-containing gas. This makes it possible to reduce the power consumption of the second supply device 16.

FIG. 11 is a diagram illustrating a control example of the third flow rate controller 252. The horizontal axis represents the current values of the first fuel cell group 10a and the second fuel cell group 10b. The vertical axis represents the amount of coolant to be supplied by the third supply device 18. As illustrated in FIG. 11, the third flow rate controller 252 causes the third supply device 18 to supply an amount of coolant according to the respective current values of the first fuel cell group 10a and the second fuel cell group 10b. That is, the third flow rate controller 252 causes the third supply device 18 to supply an adequate amount of coolant needed for the first fuel cell group 10a and the second fuel cell group 10b to generate their respective output currents. This enables the first fuel cell group 10a and the second fuel cell group 10b to be maintained at a predetermined temperature.

As described above, the third pipe L18 is formed to supply an equivalent amount of coolant between the corresponding fuel cell stacks of the fuel cell stacks 100a in the first fuel cell group 10a and the fuel cell stacks 100b in the second fuel cell group 10b. With this configuration, the third supply device 18 supplies coolant according to the currents to be generated by the first fuel cell group 10a and the second fuel cell group 10b, and is therefore capable of supplying the first fuel cell group 10a and the second fuel cell group 10b with an adequate amount of coolant to maintain the first and second fuel cell groups 10a and 10b at a predetermined temperature. In other words, in a case where the first output current and the second output current are controlled to become equal to each other, coolant is supplied through the third pipe L18 and thus the first fuel cell group 10a and the second fuel cell group 10b can be evenly supplied with an adequate amount of coolant. This makes it possible to reduce the power consumption of the third supply device 18.

There is a case where coolant is supplied through the third pipe L18 connecting the fuel cell stack 100a and the fuel cell stack 100b at a predetermined ratio of amount, for example, 6 to 4. In that case, the third flow rate controller 252 may control the ratio of the first output current and the second output current to correspond to the supply ratio. With this control, the first fuel cell group 10a and the second fuel cell group 10b can be supplied with an adequate amount of coolant. This makes it possible to reduce the power consumption of the third supply device 18.

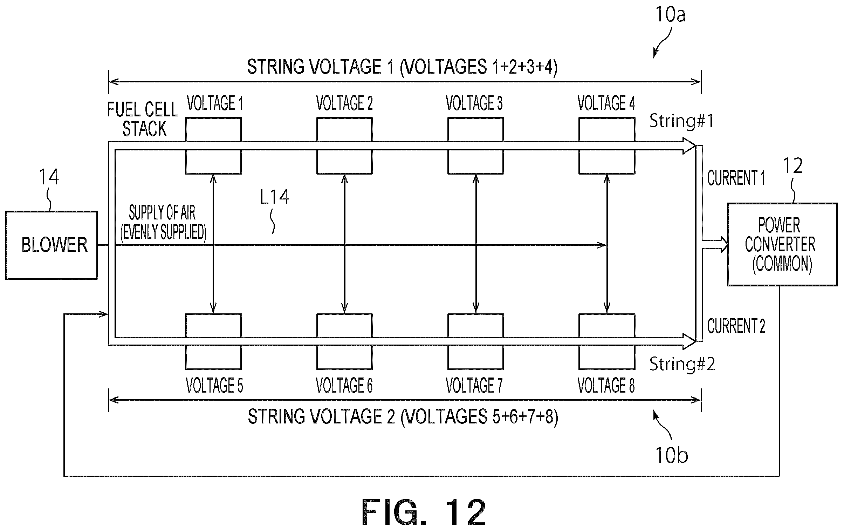

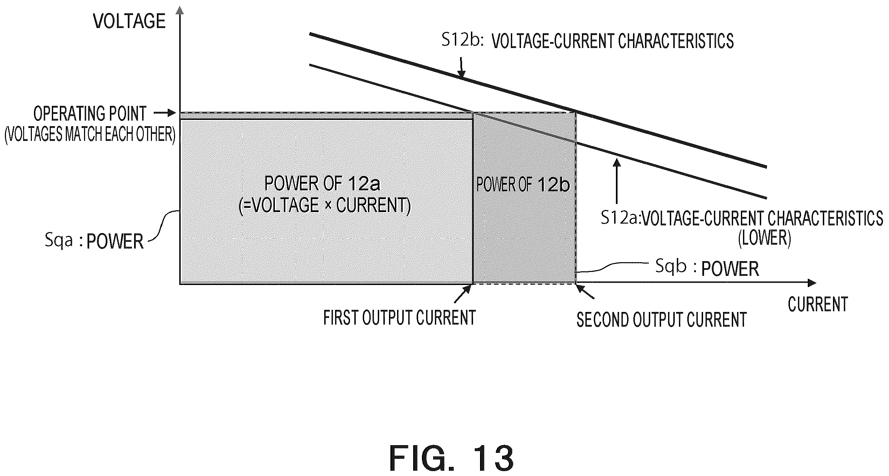

With reference to FIGS. 12 and 13, a control example for parallel connection is described below as a comparative example. FIG. 12 is a diagram illustrating a configuration example in which the first fuel cell group 10a and the second fuel cell group 10b are connected in parallel. FIG. 13 is a diagram illustrating a control example for the parallel connection. The horizontal axis represents the current values of the first fuel cell group 10a and the second fuel cell group 10b. The vertical axis represents the voltage values of the first fuel cell group 10a and the second fuel cell group 10b. A line S12a shows the voltage-current characteristics of the first fuel cell group 10a. A line S12b shows the voltage-current characteristics of the second fuel cell group 10b. A square Sqa shows the power generated by the first fuel cell group 10a. A square Sqb shows the power generated by the second fuel cell group 10b. The first output current shows an output current of the first fuel cell group 10a. The second output current shows an output current of the second fuel cell group 10b.

As illustrated in FIG. 12, when the first fuel cell group 10a and the second fuel cell group 10b are connected in parallel, the voltage of the first fuel cell group 10a (voltages 1+2+3+4) is equal to the voltage of the second fuel cell group 10b (voltages 5+6+7+8). Therefore, the powers to be generated are different from those in the control example illustrated in FIG. 8 in that the powers to be generated are controlled by the voltages generated by the first fuel cell group 10a and the second fuel cell group 10b.

Consequently, as illustrated in FIG. 13, in the comparative example, the first output current of the first power converter 12a is different from the second output current of the second power converter 12b. This causes a difference in the consumption amount of oxygen-containing gas and in the consumption amount of hydrogen-containing gas between the first fuel cell group 10a and the second fuel cell group 10b.

As described above, the first pipe L14 is formed to supply an equivalent amount of oxygen-containing gas between the corresponding fuel cell stacks of the fuel cell stacks 100a in the first fuel cell group 10a and the fuel cell stacks 100b in the second fuel cell group 10b. Therefore, unless the amount of oxygen-containing gas to be supplied from the first supply device 14 is controlled according to a larger current value of the first and second output currents, the fuel cells having the larger current value are degraded due to an insufficient amount of oxygen-containing gas. In contrast, when the amount of oxygen-containing gas to be supplied from the first supply device 14 is controlled according to a larger current value of the first and second output currents, then the fuel cells having the smaller current value of the first and second output currents are supplied with an excessive amount of oxygen-containing gas. That is, the power to be consumed by the first supply device 14 is inefficiently used.

Similarly to the above descriptions, unless the amount of hydrogen-containing gas to be supplied from the second supply device 16, and the amount of coolant to be supplied from the third supply device 18 are controlled, the fuel cells having the larger current value are degraded and the temperature of the fuel cells is increased to a high level due to shortage of the hydrogen-containing gas and coolant. In contrast, when the amount of hydrogen-containing gas to be supplied from the second supply device 16, and the amount of coolant to be supplied from the third supply device 18 according to a larger current value of the first and second output currents, then the fuel cells having the smaller current value of the first and second output currents are supplied with an excessive amount of hydrogen-containing gas and an excessive amount of coolant. That is, the power to be consumed by the second supply device 16 and the third supply device 18 is inefficiently used.

In contrast to this, the current controller 246 according to the present embodiment controls the first output current and the second output current, thereby to control the power to be generated, as described above (see FIG. 8). In particular, while controlling the first output current and the second output current to be equal to each other, the current controller 246 is also capable of controlling the first power converter 12a and the second power converter 12b so as to match the power to be generated with the power value as an output command. In this case, it is possible to match the power to be generated with the power value as a power command, while evenly supplying the first fuel cell group 10a and the second fuel cell group 10b with adequate amounts of oxygen-containing gas, hydrogen-containing gas, and coolant. As understood from the above descriptions, during the control executed by the current controller 246 according to the present embodiment, the power to be consumed by the first supply device 14, the second supply device 16, and the third supply device 18 is prevented from being used inefficiently.

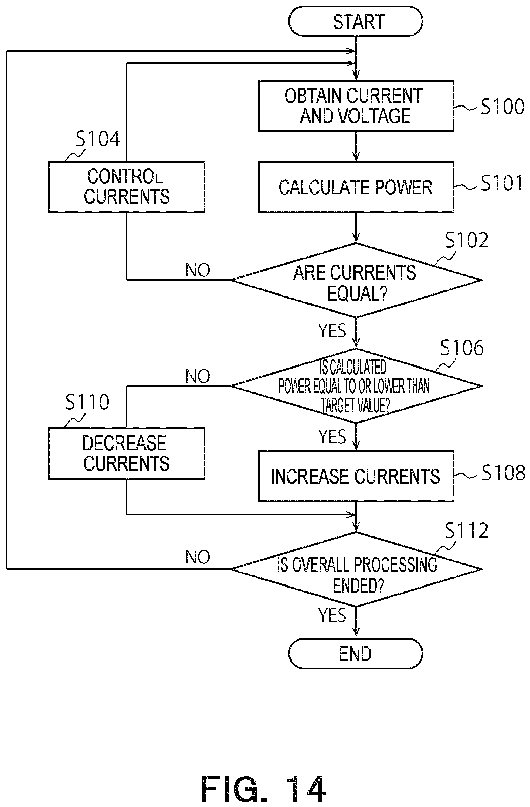

FIG. 14 is a flowchart illustrating an example of control processing in the control device 24. An example of control that is executed after a command power value is set as a power command is now described.

First, the obtaining device 242 obtains information on a current value, a voltage value, and a power from the first power converter 12a and the second power converter 12b (Step S100). Subsequently, the power calculator 244 uses the current value and the voltage value obtained from the first power converter 12a and the second power converter 12b to calculate an output power of the first fuel cell group 10a and the second fuel cell group 10b (Step S101).

Next, the current controller 246 uses the information obtained by the obtaining device 242 to determine whether the first output current to be generated by the first fuel cell group 10a is equal to the second output current to be generated by the second fuel cell group 10b (Step S102). When determining that the first output current and the second output current do not match each other (NO at Step S102), the current controller 246 controls the first power converter 12a and the second power converter 12b such that these currents match each other (Step S104), and then repeats the processes from Step S100. An allowable deviation from an identical match is set within the range of a few percent. For example, the allowable deviation is preferably set within the range of 1 percent.

In contrast, when determining that the first output current and the second output current match each other (YES at Step S102), the current controller 246 determines whether the power calculated by the power calculator 244 is equal to or lower than a command power value (Step S106).

In this case, when determining that the power calculated by the power calculator 244 is lower than the command power value (YES at Step S106), the current controller 246 controls the first power converter 12a and the second power converter 12b such that the current values are increased while matching each other (Step S108). In contrast, when determining that the power calculated by the power calculator 244 is higher than the command power value (NO at Step S106), the current controller 246 controls the first power converter 12a and the second power converter 12b such that the current values are decreased while matching each other (Step S108). Thereafter, the current controller 246 determines whether to end the overall processing (Step S112). When determining not to end the overall processing (NO at Step S112), the current controller 246 repeats the processes from Step S100. When determining to end the overall processing (YES at Step S112), the current controller 246 ends the overall processing.

In this manner, when the total power of the first fuel cell group 10a and the second fuel cell group 10b is lower than the command power value, the current controller 246 gradually increases the two currents, while matching these two currents with each other until the total power reaches the command power value. In contrast, when the total power is higher than the command power value, the current controller 246 gradually decreases the two currents, while matching these two currents with each other until the total power reaches the command power value. Even when the total power shows a constant value, the current controller 246 still continues the control to match these two currents with each other. With this operation, although the total power deviates from the command power value due to a disturbance or a change in the characteristics of each individual fuel cell, the current controller 246 is still capable of controlling two currents to be increased or decreased, while matching the two currents with each other, such that the total power is equal to the command power value.

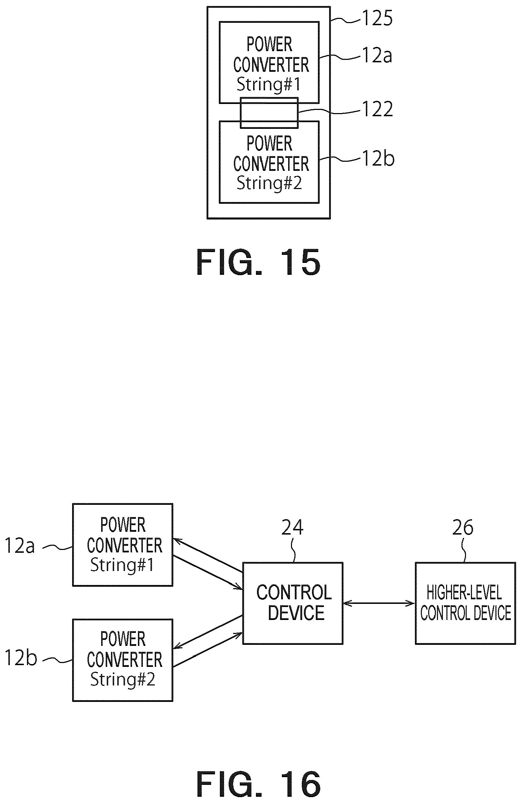

FIG. 15 is a diagram illustrating an example in which the first power converter 12a and the second power converter 12b are integrally formed into a power converter 125. For example, in the power converter 125, a calculation circuit 122 is shared between the first power converter 12a and the second power converter 12b. This makes it possible to downsize the second power converter 12b and the power converter 125.

FIG. 16 is a diagram illustrating an example in which the fuel cell system 1 further includes a higher-level control device 26 that controls the control device 24. This enables the higher-level control device 26 to, for example, control the control device 24 in accordance with other control in the fuel cell system 1.

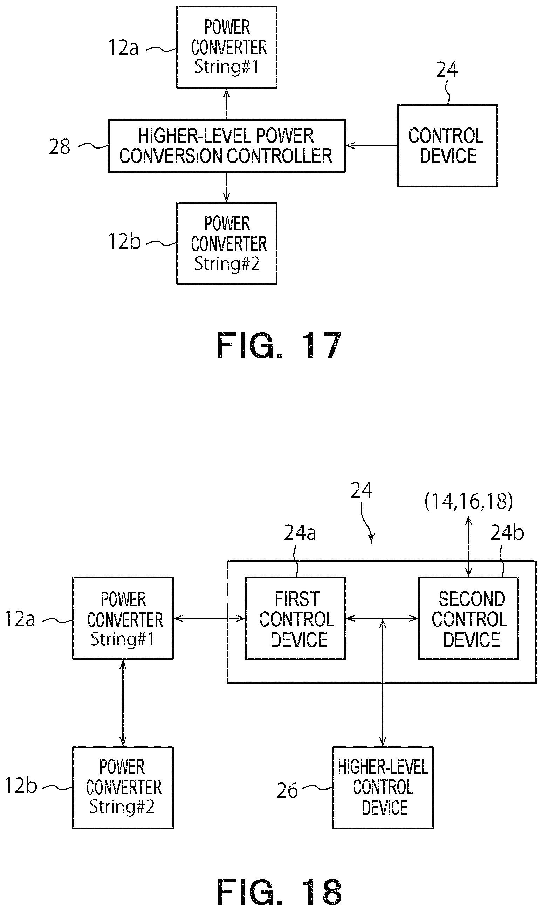

FIG. 17 is a diagram illustrating an example in which the fuel cell system 1 includes a higher-level power conversion controller 28 that is shared between the first power converter 12a and the second power converter 12b. The higher-level power conversion controller 28 shares a control circuit for the first power converter 12a and the second power converter 12b. This makes it possible to downsize the first power converter 12a and the second power converter 12b.

FIG. 18 is a diagram illustrating an example in which the control device 24 is formed of a first control device 24a and a second control device 24b. The first control device 24a controls the first power converter 12a and the second power converter 12b in accordance with the control executed by the higher-level control device 26. In contrast, the second control device 24b controls the first supply device 14, the second supply device 16, and the third supply device 18 in accordance with the control executed by the higher-level control device 26. This enables the power converters 12a and 12b to be controlled separately from the first supply device 14, the second supply device 16, and the third supply device 18, and can simplify the wiring and the like by controlling the second power converter 12b via the first power converter 12a.

As explained above, according to the present embodiment, the first power converter 12a controls the first power to be generated by the first fuel cell group 10a according to the first output current, while the second power converter 12b controls the second power to be generated by the second fuel cell group 10b according to the second output current. This makes it possible to adjust the amounts of oxygen-containing gas, hydrogen-containing gas, and coolant to be supplied to the first fuel cell group 10a, and the amounts of oxygen-containing gas, hydrogen-containing gas, and coolant to be supplied to the second fuel cell group 10b appropriately to the respective supply amounts through the first pipe L14, the second pipe L16, and the third pipe L18. Consequently, for example, even when the first pipe L14, the second pipe L16, and the third pipe L18 have a fixed pipe diameter, it is still possible to supply the first fuel cell group 10a and the second fuel cell group 10b with adequate amounts of oxygen-containing gas, hydrogen-containing gas, and coolant, so that the power consumption of the first supply device 14, the second supply device 16, and the third supply device 18 can be reduced.

In particular, even in a case where the first pipe L14, the second pipe L16, and the third pipe L18 have an equivalent pipe diameter between the corresponding fuel cell stacks of the fuel cell stacks 100a in the first fuel cell group 10a and the fuel cell stacks 100b in the second fuel cell group 10b, the fuel cell system 1 still controls the first output current and the second output current so as to be equal to each other, and is therefore capable of supplying the first fuel cell group 10a and the second fuel cell group 10b with adequate amounts of oxygen-containing gas, hydrogen-containing gas, and coolant.

While certain embodiments of the present invention have been described, these embodiments have been presented by way of example only, and are not intended to limit the scope of the inventions. Indeed, the novel embodiments described herein may be embodied in a variety of other forms and various omissions, substitutions, and changes may be made without departing from the spirit of the inventions. The embodiments and modifications thereof are included in the scope and the spirit of the invention and are also included in the inventions described in the claims and their equivalents.

## Claims

1. A fuel cell system (1) comprising:
a first fuel cell group (10a) in which a plurality of fuel cell stacks (100a) are connected in series;
a first power converter (12a) capable of controlling a first power to be generated by the first fuel cell group (10a) according to a first output current;
a second fuel cell group (10b) in which a plurality of fuel cell stacks (100b) are connected in series, the fuel cell stacks (100b) corresponding respectively to the fuel cell stacks (100a) in the first fuel cell group (10a);
a second power converter (12b) capable of controlling a second power to be generated by the second fuel cell group (10b) according to a second output current; and
a first pipe (L14) through which oxygen-containing gas is supplied between corresponding fuel cell stacks of the fuel cell stacks (100a) in the first fuel cell group (10a) and the fuel cell stacks (100b) in the second fuel cell group (10b).

2. The system (1) of Claim 1, further comprising a control device (24) configured to control the first power converter (12a) and the second power converter (12b) in such a manner that the first output current and the second output current become their predetermined values.

3. The system (1) of Claim 2, wherein the control device (24) controls the first power converter (12a) and the second power converter (12b) so as to match the first and second powers with a predetermined power value, while controlling the first output current and the second output current to correspond to the oxygen-containing gas to be supplied.

4. The system (1) of Claim 2, wherein at initial driving, the control device (24) controls the first power converter (12a) and the second power converter (12b) to increase the first output current and the second output current in such a manner that the first and second powers become a predetermined power value.

5. The system (1) of Claims 2 or 3, wherein an equivalent amount of oxygen-containing gas is supplied between corresponding fuel cell stacks of the fuel cell stacks (100a) in the first fuel cell group (10a) and the fuel cell stacks (100b) in the second fuel cell group (10b) through the first pipe (L14).

6. The system (1) of Claim 1, further comprising a second pipe(L18) through which a predetermined amount of hydrogen-containing gas is supplied between corresponding fuel cell stacks of the fuel cell stacks (100a) in the first fuel cell group (10a) and the fuel cell stacks (100b) in the second fuel cell group (10b).

7. The system (1) of Claim 6, further comprising a third pipe (L18) through which a predetermined amount of coolant is supplied between corresponding fuel cell stacks of the fuel cell stacks (100a) in the first fuel cell (10a) group and the fuel cell stacks (100b) in the second fuel cell group (10b).

8. The system (1) of Claim 7, wherein at least any of the first pipe (L14), the second pipe (L16), and the third pipe (L18) has an equivalent pipe diameter between corresponding fuel cell stacks of the fuel cell stacks (100a) in the first fuel cell group (10a) and the fuel cell stacks (100b) in the second fuel cell group (10b).

9. The system (1) of Claim 1, further comprising a first supply device (14) configured to supply the oxygen-containing gas to the first pipe (L14), wherein
an amount of the oxygen-containing gas to be supplied by the first supply device (14) is controlled according to at least either the first output current or the second output current.

10. The system (1) of Claim 6, further comprising a second supply device (16) configured to supply the hydrogen-containing gas to the second pipe (L16), wherein
an amount of the hydrogen-containing gas to be supplied by the second supply device (16) is controlled according to at least either the first output current or the second output current.

11. The system (1) of Claim 7, further comprising a third supply device (18) configured to supply the coolant to the third pipe (L18), wherein
an amount of the coolant to be supplied by the third supply device (18) is controlled according to at least either the first output current or the second output current.

12. The system (1) of Claim 11, wherein the control device (24) further controls at least any of the first supply device (14), the second supply device (16), and the third supply device (18).

13. The system (1) of Claim 12, wherein
the control device (24) includes
a first control device configured to control the first power converter (12a) and the second power converter (12b), and
a second control device (24b) configured to control at least any of the first supply device (14), the second supply device (16), and the third supply device (18), and
the system further comprises a third control device (26) configured to control the control device (24).

14. A control device (24) of a fuel cell system (1) comprising:
a first fuel cell group (10a) in which a plurality of fuel cell stacks (100a) are connected in series;
a second fuel cell group (10b) in which a plurality of fuel cell stacks (100b) are connected in series, the fuel cell stacks (100b) corresponding respectively to the fuel cell stacks (100a) in the first fuel cell group (10a);
a first power converter (12a) capable of controlling a first power to be generated by the first fuel cell group(10a) according to a first output current;
a second power converter (12b) capable of controlling a second power to be generated by the second fuel cell group (10b) according to a second output current; and
a first pipe (L14) through which oxygen-containing gas is supplied to each of the fuel cell stacks (100a) in the first fuel cell group (10a) and each of the fuel cell stacks (100b) in the second fuel cell group (10b), wherein
the control device (24) controls the first power converter (12a) and the second power converter (12b) so as to match the first and second powers with a predetermined power value, while controlling the first output current and the second output current to correspond to the oxygen-containing gas to be supplied.

15. A control method of a fuel cell system (1) comprising:
a first fuel cell group (10a) in which a plurality of fuel cell stacks (100a) are connected in series;
a second fuel cell group (10b) in which a plurality of fuel cell stacks (100b) are connected in series, the fuel cell stacks (100b) corresponding respectively to the fuel cell stacks (100a) in the first fuel cell group (10a);
a first power converter (12a) capable of controlling a first power to be generated by the first fuel cell group (10a) according to a first output current;
a second power converter (12b) capable of controlling a second power to be generated by the second fuel cell group (10b) according to a second output current; and
a first pipe (L14) through which oxygen-containing gas is supplied to each of the fuel cell stacks (100a) in the first fuel cell group (10a) and each of the fuel cell stacks (100b) in the second fuel cell group (10b), wherein
the control method comprises controlling the first power converter (12a) and the second power converter (12b) so as to match the first and second powers with a predetermined power value, while controlling the first output current and the second output current to correspond to the oxygen-containing gas to be supplied.
